# DEMANDE DE BREVET EUROPEEN

(11) **EP 1 763 187 A1**
(43) Date de publication de la demande: **14.03.2007**
(21) Numéro de dépôt: 06120151.3
(22) Date de dépôt: 05.09.2006
(51) Int. Cl.: H04L 12/58

(54) **Procédé de transfert de fichiers dans un système de messagerie instantanée, serveur et programme d'ordinateur associés**

(30) Priorité: 07.09.2005 FR 0509127
(71) Demandeur: FRANCE TELECOM, 75015 Paris (FR)
(72) Inventeur: Dauguet, Anthony, 14260, SSaint Pierre du Fresne (FR); Collomb-Patton, Bertrand, 14220, Boulon (FR); Auvray, Vincent, 14000, Caen (FR)
(74) Mandataire: Cabinet Plasseraud

(57) **Abrégé**

Procédé de transfert de fichiers dans un système de messagerie instantanée (10) comprenant des terminaux (T1, TT) et un serveur (SMI) adapté pour associer à chaque utilisateur un état courant de disponibilité, des moyens de mémorisation (BF, BO, BL) stockant au moins des listes (BL1, BLT) de contacts associées chacune à un utilisateur,
comprenant les étapes suivantes, lorsqu'un premier utilisateur (CT) souhaite transférer un fichier :
- transfert du fichier depuis le terminal (TT) du premier utilisateur au serveur ;
- réception du fichier et stockage du fichier reçu dans les moyens de mémorisation (BF) du serveur ;
- détermination par le serveur d'un identifiant du fichier ;
- préparation d'un message instantané destiné à au moins un terminal utilisateur (T1, T2) d'un utilisateur contact (C1, C2) indiqué dans la liste (BLT) associée audit premier utilisateur et comprenant l'identifiant du fichier déterminé par le serveur et un identifiant du premier utilisateur, et proposant le transfert dudit fichier.

## Description

La présente invention concerne le domaine de la messagerie instantanée.

La messagerie instantanée (en anglais « Instant Messaging ») permet à un utilisateur de communiquer avec un ou plusieurs utilisateurs distants par l'intermédiaire de terminaux utilisateurs connectés au même réseau informatique, notamment Internet. Contrairement au courrier électronique, la communication est conçue pour être instantanée.

Parmi les protocoles de communication de messagerie instantanée figurent par exemple le protocole ICQ, désigné OSCAR, ou encore le protocole Jabber standardisé par l'IETF (« Internet Engineering Task Force ») sous le nom XMPP (« extensible Messaging and Presence Protocol »).

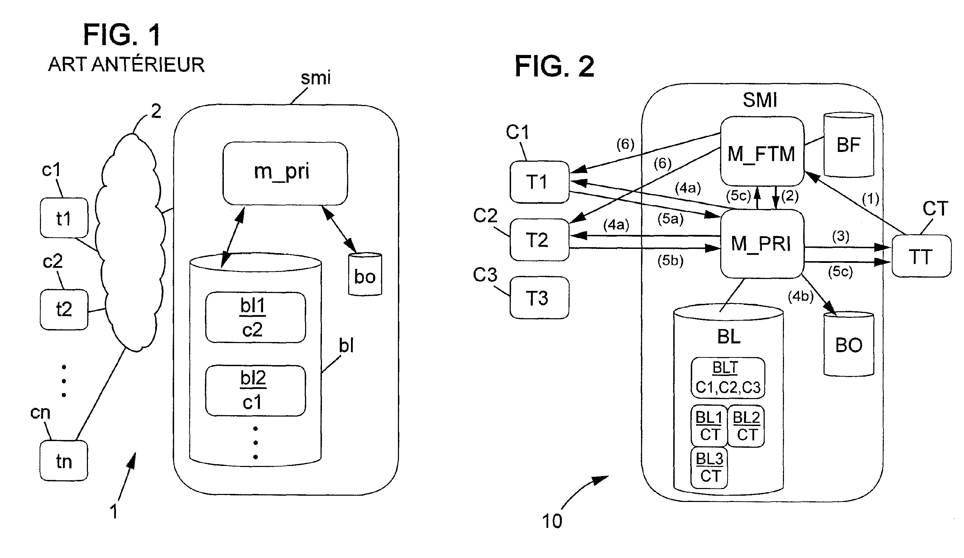

En référence à la figure 1, les systèmes de messagerie instantanée connus 1 comprennent généralement un serveur de messagerie instantanée smi et des terminaux utilisateurs t1, ..., tn reliés par un réseau 2 tel que l'Internet. Des utilisateurs c1,..., cn du service de messagerie instantanée se connectent et communiquent entre eux de façon instantanée par l'intermédiaire de ces terminaux utilisateurs. Le serveur smi comporte généralement un module principal de messagerie instantanée m_pri, de la mémoire pour des listes de contacts bl (« buddy lists ») et de la mémoire pour des messages hors-ligne bo.

Chaque utilisateur est identifié par un identifiant d'utilisateur attribué par le serveur smi par exemple lors de l'enregistrement au service de messagerie instantanée.

Dans une phase préalable, chaque utilisateur ci, i=1 à n, fournit au serveur smi le ou les identifiants d'un ou plusieurs autres utilisateurs qui sont les utilisateurs avec lesquels l'utilisateur souhaite communiquer via le service de messagerie instantanée. Le serveur smi mémorise cette liste de contacts bli, i=1 à n, dans les moyens de mémorisation de listes de contacts bl. Par exemple, l'utilisateur c1 a dans sa liste de contacts bl1 l'utilisateur c2 et l'utilisateur c2 a dans sa liste de contacts bl2 l'utilisateur c1.

Le module principal de messagerie m_pri est adapté pour associer à chacun des utilisateurs du service de messagerie instantanée un état courant de disponibilité pour le dialogue instantané. Les états principaux possibles sont « disponible », « absent », « occupé » et « déconnecté ». Chaque état principal peut se décliner en états plus détaillés (connecté, non connecté, en pause déjeuner, en conversation téléphonique, etc.)

L'état de disponibilité est déterminé et régulièrement actualisé par le module principal m_pri du serveur smi pour un utilisateur en fonction notamment de l'état de connexion ou non de l'utilisateur au service de messagerie. Le module m_pri détecte tout changement de l'état de connexion et actualise à chaque fois. En effet, le serveur smi est informé de chaque connexion d'un utilisateur au service. Ainsi le module principal m_pri peut définir à chaque instant les utilisateurs connectés et les utilisateurs non connectés. Le module principal m_pri affecte l'état « déconnecté » ou « hors ligne » à tout utilisateur non connecté et l'état « disponible » à tout utilisateur connecté, à moins qu'un utilisateur connecté ne l'ait informé d'un état passager de non disponibilité alors même qu'il reste connecté, par exemple lié à une conversation avec une personne dans son bureau, à une pause déjeuner etc. Dans ce cas, le module principal m_pri affecte l'état principal non disponible à cet utilisateur.

Chaque utilisateur ci peut visualiser, dans une fenêtre de visualisation de son terminal utilisateur ti, les états de disponibilité, par exemple détaillés, connus du module principal m_pri du serveur, des contacts désignés dans sa liste de contacts bli. Il peut sélectionner un ou plusieurs utilisateurs de sa liste de contacts et ouvrir une fenêtre de messages dans laquelle il saisit, puis valide un message qui leur est destiné, afin de mener une discussion par messagerie instantanée avec ces utilisateurs.

Le message instantané ainsi saisi et validé est transmis par le terminal ti au serveur de messagerie instantanée smi, ainsi que l'identifiant des contacts sélectionnés par l'utilisateur ci. Le module principal m_pri traite alors ce message en fonction de chacun de l'état de disponibilité associés aux contacts sélectionnés. II envoie le message à chacun des contacts disponibles et il stocke le message dans les moyens de mémorisation de messages hors-ligne bo pour chacun des contacts sélectionnés alors non disponibles. Chacun de ces messages stockés sera envoyé ultérieurement, lorsque le contact auquel il est destiné sera redevenu disponible.

Les messages instantanés reçus sont temporaires, c'est-à-dire qu'ils disparaissent une fois que l'utilisateur ferme sa fenêtre de messages, à moins que ce dernier ne les enregistre expressément. Les messages peuvent aussi être automatiquement sauvegardés dans un historique.

La plupart des systèmes de messagerie instantanée offrent également aux utilisateurs une fonctionnalité de transfert de fichiers. On entend par fichier un ensemble de données identifié par un nom associé à un emplacement de stockage et considéré comme une unité de traitement par un ordinateur. Un message au contraire est une unité destinée à être envoyée une fois saisie.

La fonctionnalité de transfert de fichiers sur messagerie instantanée est utilisée par exemple entre deux personnes pour illustrer une discussion par échange de messages instantanés.

A l'heure actuelle, au contraire des messages instantanés, le transfert de fichiers dans le cadre des services de messagerie instantanée entre deux utilisateurs s'effectue en point à point entre les terminaux des utilisateurs sans passer par le serveur de messagerie instantanée.

Ainsi en référence à la figure 1, lorsque l'utilisateur c1 souhaite transférer un fichier à l'utilisateur c2, le transfert de fichier se fait directement entre le terminal utilisateur t1 et le terminal utilisateur t2, sans transiter par le serveur de messagerie instantanée smi.

Dans le cas d'un transfert de fichiers à plusieurs destinataires, il y a autant donc d'envois du fichier depuis le terminal expéditeur que d'utilisateurs destinataires.

Ce mécanisme utilisé pour le transfert de fichiers présente un certain nombre d'inconvénients.

Pour avoir effectivement accès à un fichier suite à une opération de transfert par messagerie instantanée, un utilisateur sélectionné comme destinataire du fichier doit accepter la transmission du fichier de façon quasi-instantanée (avant l'expiration d'une temporisation), sinon le transfert n'a pas lieu. Ainsi si un tel utilisateur, connu comme disponible par le module principal m_pri du serveur de messagerie instantanée et apparaissant donc comme tel dans la fenêtre de visualisation des contacts de l'utilisateur expéditeur du fichier, ne se trouve pas devant son terminal utilisateur avant l'expiration de la temporisation, il ne pourra pas avoir accès au fichier. Le fichier devra donc lui être renvoyé par l'utilisateur expéditeur.

De plus, lorsque plusieurs fichiers ont fait l'objet d'une tentative de transfert au cours de plusieurs discussions parallèles avec certains contacts communs, il n'est pas possible de retrouver aisément dans quelle discussion s'insère le transfert d'un fichier donné, ni la chronologie du transfert du fichier par rapport aux messages échangés.

Par ailleurs, la réception de tels fichiers peut engendrer un problème de sécurité. En effet, rien ne garantit l'intégrité des fichiers, ni le fait qu'ils soient exempts de virus informatiques. Et l'utilisation d'un dispositif de type coupe-feu (en anglais « firewall ») nécessite de connaître les ports et/ou les protocoles utilisés pour permettre le transfert. De ce fait, un tel dispositif n'est pas toujours facile à mettre en oeuvre, notamment dans une entreprise au sein de laquelle de nombreux protocoles différents de messagerie instantanée peuvent être utilisés.

Même lorsque les services de messagerie instantanée permettent d'archiver les messages instantanés échangés lors d'une discussion, il est impossible d'archiver avec ces messages une trace des fichiers échangés au cours de cette discussion. II n'y a pas ici de notion de pièce jointe à un message.

La présente invention vise à proposer une solution à ces problèmes.

Ainsi l'invention propose, un procédé de transfert de fichiers dans un système de messagerie instantanée comprenant des terminaux utilisateurs et un serveur, le serveur comprenant des moyens pour associer à un utilisateur, et actualiser, un état courant de disponibilité pour dialoguer, des moyens de mémorisation stockant au moins une liste associée audit utilisateur du système et indiquant d'autres utilisateurs désignés préalablement par ledit utilisateur comme ses contacts,
ledit procédé comprenant, lorsqu'un premier utilisateur procède au transfert d'un fichier :
- une étape de transfert dudit fichier depuis un premier terminal utilisateur dudit premier utilisateur à destination du serveur;
- une étape de stockage dudit fichier dans les moyens de mémorisation du serveur;
- une étape de détermination par le serveur d'un identifiant dudit fichier ;
- une étape de préparation d'un message instantané destiné à au moins un deuxième terminal utilisateur d'au moins un deuxième utilisateur indiqué dans la liste associée audit premier utilisateur, ledit message instantané comprenant l'identifiant du fichier déterminé par le serveur et un identifiant du premier utilisateur, et proposant le transfert dudit fichier provenant dudit premier utilisateur ainsi identifié, pour un envoi du message instantané préparé audit deuxième terminal utilisateur dudit deuxième utilisateur.

Ainsi un procédé selon l'invention permet d'associer à chaque transfert de fichier un message instantané indiquant l'identifiant du fichier. Le transfert du fichier va ainsi pouvoir être tracé dans son contexte, en association avec des messages instantanés échangés lors de discussions entre les utilisateurs. L'archivage des messages reçus par un utilisateur contact comprend, si un fichier a été transféré au cours de cette discussion, un message relatif à ce fichier et indiquant l'identifiant du fichier.

Dans une mode de réalisation, selon le procédé décrit ci-dessus, le message instantané est préparé par le serveur.

Dans une autre mode de réalisation, selon le procédé comme décrit ci-dessus, le message instantané est préparé par le terminal du premier utilisateur.

Dans une autre mode de réalisation, le procédé comme décrit ci-dessus, comprend en outre une étape d'envoi du message instantané préparé vers ledit deuxième utilisateur si l'état du deuxième utilisateur apparaît comme disponible dans la liste associée au premier utilisateur.

Dans une autre mode de réalisation, le procédé comme décrit ci-dessus, comprend en outre, en cas de réception par le serveur d'un message instantané provenant du terminal utilisateur dudit deuxième utilisateur et acceptant ledit transfert proposé, une étape de transfert dudit fichier par le serveur à destination dudit deuxième terminal utilisateur.

Dans une autre mode de réalisation, le procédé comme décrit ci-dessus, comprend en outre, si l'état du deuxième utilisateur apparaît comme non disponible dans la liste associée au premier utilisateur, une étape de stockage dudit message instantané préparé dans les moyens de mémorisation du serveur, et une étape d'envoi dudit message audit deuxième terminal utilisateur une fois que ledit état apparaît comme disponible dans la liste du premier utilisateur.

Une telle disposition permet avantageusement de garantir le transfert de fichier à destination d'un utilisateur même lorsque celui-ci n'est pas disponible.

Dans un autre mode de réalisation, selon le procédé comme décrit ci-dessus, après ladite étape de stockage du fichier, le serveur effectue au moins une opération parmi un traitement anti-virus et un versionnage (ou en anglais « versioning »).

Cette disposition offre une garantie d'intégrité des fichiers transférés par le biais du service de messagerie instantanée. Cette disposition permet aussi d'en différencier les versions successives. Le traitement est effectué de façon centralisée, donc est moins coûteux que s'il était réalisé par les terminaux des utilisateurs expéditeurs ou destinataires. Les utilisateurs ont donc la certitude que quelle que soit la provenance du fichier, un traitement a été effectué à l'aide d'outils puissants et à jour.

Dans un autre mode de réalisation, le terminal du premier utilisateur transmet en outre au serveur un identifiant dudit deuxième utilisateur auquel le premier utilisateur souhaite transférer le fichier, et le serveur prépare un message instantané proposant le transfert dudit fichier pour ledit deuxième utilisateur ainsi identifié.

Avantageusement, la duplication des messages est donc effectuée de façon centralisée, sans requérir de capacités de traitement du terminal utilisateur expéditeur.

Comme il sera détaillé plus loin, un procédé selon l'invention permet de réutiliser, pour certaines opérations de gestion de fichiers à transférer, des modules de gestion des messages au sein du serveur de messagerie instantanée et donc de limiter les développements nécessaires à la mise en oeuvre de l'invention.

Suivant un autre aspect, l'invention propose un serveur apte à être utilisé dans un système de messagerie instantanée comprenant en outre des terminaux utilisateurs, ledit serveur comprenant :
- des moyens pour associer à un utilisateur et actualiser un état courant de disponibilité pour dialoguer ;
- des moyens de mémorisation stockant au moins une liste associée audit utilisateur du système et indiquant d'autres utilisateurs désignés préalablement par ledit utilisateur comme ses contacts,
- des moyens adaptés pour recevoir un fichier provenant d'un premier terminal utilisateur, pour déterminer un identifiant dudit fichier et pour stocker le fichier reçu dans les moyens de mémorisation ;
- des moyens pour, suite à la réception d'un message instantané provenant d'au moins un deuxième terminal utilisateur d'au moins un deuxième utilisateur acceptant le transfert dudit fichier stocké, transférer ledit fichier audit deuxième terminal utilisateur.

Dans une mode de réalisation, le serveur comme décrit ci-dessus comprend :
- des moyens pour préparer un message instantané destiné audit terminal utilisateur dudit deuxième utilisateur indiqué dans la liste associée audit premier utilisateur, ledit message instantané comprenant l'identifiant du fichier déterminé par le serveur et l'identifiant du premier utilisateur, et proposant le transfert dudit fichier ; et
- des moyens pour envoyer le message instantané préparé audit deuxième terminal utilisateur.

Dans une autre mode de réalisation, dans le serveur comme décrit ci-dessus, les moyens pour envoyer le message instantané sont adaptés pour l'envoyer audit deuxième terminal utilisateur si ledit état apparaît comme disponible dans lesdits moyens de gestion d'état,
ledit serveur comprenant en outre des moyens pour stocker dans les moyens de mémorisation le message instantané préparé lorsque ledit état apparaît comme non disponible dans les moyens de gestion d'état, lesdits moyens pour envoyer un message instantané étant adaptés pour envoyer le message stocké audit terminal utilisateur une fois que ledit état apparaît comme disponible.

Dans une autre mode de réalisation le serveur comme décrit ci-dessus comprend en outre des moyens pour réaliser au moins une opération du fichier stocké parmi un traitement anti-virus et un versionnage.

Dans une autre mode de réalisation, dans le serveur comme décrit ci-dessus, les moyens pour préparer un message instantané sont adaptés pour préparer un message instantané proposant le transfert du fichier pour ledit deuxième utilisateur auquel le premier utilisateur souhaite transférer le fichier et dont un identifiant est transmis au serveur par le terminal du premier utilisateur.

Suivant un autre aspect, l'invention propose un terminal utilisateur apte à être utilisé dans un système de messagerie instantanée comportant en outre un serveur comprenant des moyens pour associer à un utilisateur, et actualiser, un état courant de disponibilité pour dialoguer, des moyens pour dialoguer, des moyens de mémorisation stockant au moins une liste associée audit utilisateur du système et indiquant d'autres utilisateurs désignés préalablement par ledit utilisateur comme ses contacts,
ledit terminal utilisateur comprenant des moyens pour, lorsqu'un premier utilisateur dudit terminal utilisateur procède au transfert d'un fichier, transférer ledit fichier depuis le terminal utilisateur à destination du serveur pour le stockage dudit fichier reçu dans les moyens de mémorisation du serveur et la détermination par le serveur d'un identifiant dudit fichier ;
et des moyens pour la préparation d'un message instantané destiné à au moins un deuxième utilisateur indiqué dans la liste associée audit premier utilisateur, ledit message instantané comprenant l'identifiant du fichier déterminé par le serveur et l'identifiant dudit premier utilisateur souhaitant transférer le fichier et proposant le transfert dudit fichier.

Dans une mode de réalisation, le terminal comme décrit ci-dessus comprend
- des moyens pour recevoir du serveur un message instantané comprenant l'identifiant du fichier ;
- des moyens pour préparer le message instantané destiné audit deuxième utilisateur et proposant le transfert du fichier ; et,
- des moyens pour envoyer ledit message instantané préparé au deuxième terminal utilisateur du deuxième utilisateur.

Suivant un autre aspect, l'invention propose un dispositif de gestion de fichiers provenant d'un terminal utilisateur, comprenant au moins:
- des moyens de détermination d'un identifiant d'un fichier stocké ;
- des moyens de stockage dudit identifiant en association avec ledit fichier stocké;
caractérisé en ce qu'il comprend ;
- des moyens de traitement antivirus dudit fichier stocké ;
- des moyens de versionnage dudit fichier stocké.

Suivant un autre aspect, l'invention propose un procédé de transfert de fichiers dans un système de messagerie instantanée, ledit système comprenant un premier terminal, au moins un deuxième terminal et un serveur
ledit procédé comprenant:
- un étape de transfert d'un fichier depuis le premier terminal vers le serveur,
- un étape de préparation d'un message instantané, ledit message instantané comprenant un identifiant dudit fichier et un identifiant d'un premier utilisateur, ledit message instantané proposant un transfert dudit fichier, procédé caractérisé en ce qu'il comprend en outre
- un étape d'envoi dudit message instantané depuis ledit serveur vers ledit deuxième terminal en fonction d'un état de disponibilité d'au moins un deuxième utilisateur dudit deuxième terminal.

Suivant un autre aspect, l'invention propose un programme d'ordinateur comprenant des instructions pour mettre en oeuvre les étapes d'un procédé comme décrit ci-dessus lorsque ledit programme est exécuté par un ordinateur.

D'autres caractéristiques et avantages de l'invention apparaîtront encore à la lecture de la description qui va suivre. Celle-ci est purement illustrative et doit être lue en regard des dessins annexés sur lesquels :
- la figure 1 représente un système de messagerie instantanée de l'art antérieur ;
- la figure 2 illustre un système de messagerie instantanée dans un mode de réalisation de l'invention.

Le document US 2002/0126135 décrit un système pour le transfert d'un message avec une représentation d'une image depuis un expéditeur vers un destinataire et le transfert et stockage de l'image correspondant à la représentation sur un serveur central. Le destinataire peut agir sur l'image stockée sur le serveur et peut se procurer une certaine partie de l'image. Aucune notion de gestion de présence n'est couplée au système du document US 2002/0126135.

Le système de messagerie instantanée 10 représenté sur la figure 2 comprend un serveur de messagerie instantanée SMI et des terminaux utilisateurs T1, ..., TM reliés par un réseau Internet (non représenté).

Des utilisateurs C1,..., CM se connectent par l'intermédiaire de ces terminaux utilisateurs et communiquent entre eux en utilisant le service de messagerie instantanée fourni par le système 10.

Seuls sont représentés sur la figure 2 les terminaux utilisateurs T1, T2, T3 et TT et leurs utilisateurs respectifs C1, C2, C3 et CT.

Le serveur SMI comporte un module principal de messagerie instantanée M_PRI, des moyens de mémorisation, respectivement BL et BO, des listes de contacts définies par les utilisateurs et de messages hors-ligne. II comporte en outre un module de gestion de fichiers M_FTM adapté pour traiter les transferts de fichiers comme indiqué ci-après et une base de stockage de fichiers BF. Le module de gestion de fichiers est adapté pour effectuer des tâches de gestion de fichiers diverses relative à un fichier stocké dans la base de fichiers BF. Par exemple, il est adapté pour effectuer un traitement antivirus et il est adapté en outre pour effectuer un traitement de versionnage. Le module de gestion de fichiers M_FTM peut être soit un élément du serveur SMI, soit un élément externe, sur un autre serveur, dialoguant avec le serveur SMI.

Un utilisateur est identifié par un identifiant d'utilisateur attribué par le serveur SMI par exemple lors de l'enregistrement au service de messagerie instantanée.

Comme indiqué précédemment, dans une phase préalable, un utilisateur CT, C1, C2 et C3 fournit au serveur SMI par l'intermédiaire de son terminal utilisateur TT, T1, T2 et T3, le ou les identifiants d'un ou plusieurs autres utilisateurs qui sont les utilisateurs avec lesquels l'utilisateur souhaite communiquer via le service de messagerie instantanée. Le serveur SMI mémorise ces listes de contacts BLT, BL1, BL2 et BL3 dans les moyens de mémorisation de contacts BL. Dans le cas présent, la liste de contacts BLT de l'utilisateur CT désigne les utilisateurs C1, C2 et C3 et la liste de contacts BL1, BL2, BL3 respective de chacun des utilisateurs C1, C2, C3 désigne l'utilisateur CT.

Le module principal de messagerie M_PRI du serveur SMI est adapté pour associer aux utilisateurs du service de messagerie instantanée un état courant de disponibilité pour le dialogue instantané, qu'il détermine et actualise en fonction de l'état de connexion ou non de l'utilisateur au service de messagerie et d'éventuelles informations supplémentaires communiquées au serveur SMI par l'utilisateur.

Le module principal M_PRI du serveur selon l'invention SMI est adapté pour traiter chaque message instantané envoyé par un utilisateur comme décrit précédemment en référence au module principal m_pri du serveur smi de la figure 1.

Chaque utilisateur C1, C2, C3 ou CT peut visualiser, dans une fenêtre de visualisation de son terminal utilisateur T1, T2, T3 ou TT, les états de disponibilité, par exemple détaillés, des contacts désignés dans sa liste de contacts BL1, BL2, BL3 ou BLT connus du module principal M_PRI. Il peut sélectionner un ou plusieurs utilisateurs de sa liste de contacts et ouvrir une fenêtre de messages dans laquelle il saisit un message qui leur est destiné, puis le valide.

Le message instantané ainsi saisi et validé est transmis au serveur de messagerie instantanée SMI ainsi que l'identifiant des contacts sélectionnés par l'utilisateur. Le module principal M_PRI traite alors ce message en fonction de l'état de disponibilité de chacun des contacts sélectionnés. II envoie le message à chacun des contacts disponibles et il stocke le message pour chacun des contacts sélectionnés alors non disponibles dans les moyens de mémorisation de messages hors-ligne BO. Ces messages stockés seront respectivement envoyés ultérieurement lorsque le contact auquel il est destiné sera redevenu disponible.

Selon l'invention, un transfert de fichier est mis en oeuvre conformément aux étapes décrites ci-dessous.

Lorsque un utilisateur, par exemple l'utilisateur CT, souhaite transférer un fichier F stocké dans son terminal utilisateur TT à des utilisateurs de sa liste de contacts CT, il sélectionne le fichier à transférer par l'intermédiaire du terminal TT et le ou les utilisateurs de sa liste de contacts BLT auxquels il destine ce fichier. Dans le cas présent, il sélectionne un fichier au format Word F et l'ensemble des utilisateurs C1, C2, C3 de sa liste de contacts BLT.

Le terminal TT transmet alors (étape (1)) au module M_FTM de gestion de fichiers du serveur de messagerie instantanée SMI, des données indiquant qu'un transfert de fichier va avoir lieu depuis l'utilisateur CT et qu'il a pour destinataires les utilisateurs C1, C2 et C3. Le module de gestion de fichiers M_FTM se prépare alors à traiter ce transfert. Puis le terminal TT transmet au module de gestion de fichiers M_FTM le fichier sélectionné F, selon un protocole de transfert de fichier standard, par exemple FTP (« File Transfer Protocol ») ou HTTP (« Hypertext Transfer Protocol »).

Une fois qu'il a reçu le fichier ainsi transmis, le module de gestion de fichiers M_FTM effectue des tâches de gestion de fichiers.

Il stocke le fichier dans la base de fichiers BF.

Puis il détermine un identifiant du fichier ainsi stocké. Dans le mode de réalisation décrit, l'identifiant ainsi déterminé est l'adresse URI (« Uniform Resource Identifier ») du fichier stocké dans la base de fichiers BF. Cette adresse est stockée dans la base de fichiers BF en association avec le fichier F.

Dans des modes de réalisation avantageux, le module de gestion de fichiers M_FTM effectue, outre le stockage, des tâches supplémentaires de gestion de fichiers, telles qu'un traitement antivirus ou un versionnage.

Dans le traitement anti-virus, il détecte si le fichier est infecté par un virus informatique. Suivant les modes de réalisation, le traitement est réalisé avec succès si le fichier ne présente pas de virus, ou encore si un virus détecté dans un fichier a pu être éradiqué. Sinon, le traitement se solde par un échec.

Dans le traitement de versionnage, le module de gestion de fichiers détermine s'il existe dans la base de fichiers BF des versions autres du fichier et dans le cas positif, traite la version du fichier reçu de manière à pouvoir la retrouver facilement et l'identifier par rapport aux autres versions stockées dans la base de fichiers BF. Un tel traitement permet de récupérer toutes les versions intermédiaires des fichiers (ie l'adresse URI attribuée au fichier reçu sera différente de l'adresse URI attribuée à une version précédemment stockée), ainsi que les différences entre les versions. L'historique relatif à la vie du fichier est ainsi sauvegardé.

Dans le mode de réalisation décrit, la réalisation des tâches autres que le stockage est systématique. Dans un autre mode de réalisation, seul le stockage est réalisé. Dans encore un autre mode de réalisation, une ou plusieurs des tâches n'est pas appliquée systématiquement, mais seulement pour certains fichiers déterminés en fonction de règles prédéfinies prenant en compte par exemple les utilisateurs expéditeurs et/ou destinataires, le type de fichiers etc.

Puis le module de gestion de fichiers M_FTM envoie au module principal M_PRI un message instantané (étape (2)).

Si les opérations de gestion de fichiers réalisées par le module de gestion de fichiers M_FTM se sont soldées par un échec (présence de virus, espace de stockage dans la base BF trop faible pour stocker le nouveau fichier, etc), ce message indique un non-dépôt du fichier et comprend l'identifiant de l'expéditeur initial CT du fichier ainsi que la cause d'échec.

Sinon, si les opérations de gestion de fichiers réalisées par le module de gestion de fichiers M_FTM se sont déroulées avec succès, le message indique qu'un dépôt de fichier a été correctement effectué dans la base de fichiers BF, et comprend l'identifiant de l'utilisateur expéditeur CT, les identifiants des destinataires C1, C2 et C3 du fichier sélectionnés par l'utilisateur CT et l'adresse URI du fichier.

Pour envoyer ce message, le module de gestion de fichiers M_FTM s'adresse au module principal M_PRI en tant qu'utilisateur du service de messagerie instantanée. Cette disposition permet de ne pas modifier l'interface de communication du module principal M_PRI, et donc de faciliter l'implémentation de l'invention sur les serveurs de messagerie instantanée existants.

Lorsqu'il a reçu ce message en provenance du module de gestion de fichiers M_FTM, le module principal M_PRI envoie à son tour un message instantané à l'utilisateur expéditeur CT (étape (3)).

Si le message reçu du module de gestion de fichiers M_FTM indiquait un échec, le message envoyé à l'utilisateur CT par le module principal M_PRI l'informe de l'échec du transfert de fichier et de la cause de cet échec. Dans ce cas, le traitement du transfert de fichier s'arrête alors.

Si le message reçu du module de gestion de fichiers M_FTM indiquait un succès, le message envoyé à l'utilisateur CT par le module principal M_PRI l'informe que le fichier a été correctement déposé auprès du serveur SMI.

Puis le module principal M_PRI du serveur SMI détermine quels sont les utilisateurs disponibles parmi les utilisateurs destinataires du fichier C1, C2, C3 tels que sélectionnés par l'utilisateur CT.

Dans le cas présent, les utilisateurs C1 et C2 sont disponibles, tandis que l'utilisateur C3 ne l'est pas.

Alors, le module principal M_PRI prépare un message instantané pour chacun des utilisateurs destinataires du fichier C1, C2, C3. Ce message instantané comprend l'identifiant de l'utilisateur expéditeur CT, l'adresse URI du fichier F et l'information que l'utilisateur expéditeur CT souhaite transférer au destinataire dudit message le fichier ainsi identifié et requérant son accord (étape (4a)).

Le module principal M_PRI envoie ce message instantané préparé à chacun des terminaux utilisateurs T1, T2 des destinataires disponibles C1 et C2 (étape (4a)).

Le module principal M_PRI n'envoie pas le message préparé au destinataire C3 car il est non disponible, mais il stocke ce message dans les moyens de mémorisation de messages hors-ligne BO (étape (4b)). Le message ainsi stocké sera adressé à l'utilisateur C3 une fois qu'il sera à nouveau disponible pour l'échange par le service de messagerie instantanée.

L'utilisateur C1 répond par message instantané adressé au module principal M_PRI, depuis son terminal utilisateur T1, qu'il accepte le transfert (étape (5a)). De même, l'utilisateur C2 répond, depuis son terminal utilisateur T2, par message instantané adressé au module principal M_PRI qu'il accepte le transfert (étape (5b)). Dans une variante de réalisation, le ou les utilisateurs précité(s) peuvent cliquer sur le lien contenant l'URI pour donner leur accord.

Suite à la réception de chacun de ces deux messages, le module principal M_PRI envoie un message instantané à l'utilisateur CT et au module de gestion de fichiers M_FTM pour leur indiquer que le transfert a été accepté et indiquant l'identifiant de l'utilisateur ayant accepté (étape (5c)).

Au cas où un utilisateur aurait refusé, le message instantané envoyé par le module principal M_PRI à l'utilisateur CT et au module de gestion de fichiers M_FTM aurait compris l'identifiant de l'utilisateur ayant répondu et indiqué que le transfert a été refusé.

Puis le fichier est transféré à l'étape 6 par le module de gestion de fichiers M_FTM aux terminaux utilisateurs des utilisateurs destinataires ayant accepté ce transfert, c'est-à-dire, dans le cas présent, aux terminaux T1, T2 des utilisateurs C1 et C2, sans passer par le module principal M_PRI. Ce transfert a lieu conformément à un protocole de transfert de fichier standard, par exemple FTP.

Les étapes réalisées dans chaque terminal utilisateur décrites ci-dessus, sont mises en oeuvre par l'intermédiaire d'une application informatique exécutée par des moyens de traitement du terminal et comprenant des instructions pour mettre en oeuvre ces étapes.

Les étapes réalisées selon l'invention dans le serveur de messagerie SMI, décrites ci-dessus, sont mises en oeuvre par l'intermédiaire d'une application informatique exécutée par des moyens de traitement du serveur et comprenant des instructions pour mettre en oeuvre ces étapes.

Dans le mode de réalisation décrit, le message instantané proposant le transfert et indiquant l'identifiant du fichier est préparé et envoyé aux utilisateurs contacts disponibles de l'utilisateur CT par le serveur SMI. Dans un autre mode de réalisation, c'est l'utilisateur CT lui-même, qui après la réception du message instantané du serveur (étape (3)) l'informant du dépôt du fichier, prépare et envoie ce message à un ou plusieurs des utilisateurs contacts disponibles.

Ainsi l'invention permet un transfert de fichiers entre utilisateurs de service de messagerie instantanée, qui est supervisé par le serveur de messagerie SMI.

L'utilisateur expéditeur CT n'a qu'une unique opération de transfert à réaliser, même en cas de destinataires multiples. Les transferts aux utilisateurs non disponibles sont ensuite gérés par le serveur SMI.

Par ailleurs, au cas où l'utilisateur C2 ne se serait pas trouvé devant son terminal utilisateur lors de l'envoi du message demandant si l'utilisateur C2 accepte le transfert du fichier (étape(4a)), et même en cas de fermeture de la fenêtre de discussion sur le terminal T2 avec l'utilisateur CT, il est possible de retrouver la trace de ce message, fournissant notamment l'adresse URI du fichier, dans l'historique sauvegardé des messages reçus. Cet historique garde donc la trace du fichier à transférer et permet de retrouver le contexte de cet échange.

Dans un tel cas, l'utilisateur expéditeur CT n'a en outre plus aucune action à faire. En effet, le fichier a été déposé dans la base de fichiers BF du serveur SMI et pourra être transféré directement par le serveur au moment où l'utilisateur C2 répondra positivement à ce message retrouvé dans l'historique.

L'invention permet avantageusement de réaliser de façon centralisée le stockage des fichiers ayant fait l'objet d'un transfert, ainsi que des opérations de gestion de fichiers telles que la recherche de virus, ou encore le suivi de versions.

## Revendications

1. Procédé de transfert de fichiers dans un système de messagerie instantanée (10) comprenant des terminaux utilisateurs (T1, T2, T3, TT) et un serveur (SMI), le serveur (SMI) comprenant des moyens pour associer à un utilisateur (C1, C2, C3, CT), et actualiser, un état courant de disponibilité pour dialoguer, des moyens de mémorisation (BF, BO, BL) stockant au moins une liste (BL1, BL2, BL3, BLT) associée audit utilisateur (C1, C2, C3, CT) du système (10) et indiquant d'autres utilisateurs désignés préalablement par ledit utilisateur (C1, C2, C3, CT) comme ses contacts,
ledit procédé comprenant, lorsqu'un premier utilisateur (CT) procède au transfert d'un fichier :
- une étape de transfert dudit fichier depuis un premier terminal utilisateur (TT) dudit premier utilisateur (CT) à destination du serveur (SMI);
- une étape de stockage dudit fichier dans les moyens de mémorisation (BF) du serveur (SMI);
- une étape de détermination par le serveur (SMI) d'un identifiant dudit fichier ;
- une étape de préparation d'un message instantané destiné à au moins un deuxième terminal utilisateur (T1, T2, T3) d'au moins un deuxième utilisateur (C1, C2, C3) indiqué dans la liste (BLT) associée audit premier utilisateur (CT), ledit message instantané comprenant l'identifiant du fichier déterminé par le serveur et un identifiant du premier utilisateur (CT), et proposant le transfert dudit fichier provenant dudit premier utilisateur (CT) ainsi identifié, pour un envoi du message instantané préparé audit deuxième terminal utilisateur (T1, T2, T3) dudit deuxième utilisateur (C1, C2, C3).

2. Procédé selon la revendication 1, comprenant en outre, si l'état du deuxième utilisateur (C1, C2, C3) apparaît comme non disponible dans la liste (BLT) associée au premier utilisateur (CT), une étape de stockage dudit message instantané préparé dans les moyens de mémorisation (BO) du serveur (SMI), et une étape d'envoi dudit message audit deuxième terminal utilisateur (T1, T2, T3) une fois que ledit état apparaît comme disponible dans la liste (BLT) du premier utilisateur (CT).

3. Procédé selon l'une quelconque des revendications précédentes, selon lequel après ladite étape de stockage du fichier, le serveur (SMI) effectue au moins une opération parmi un traitement anti-virus et un versionnage.

4. Procédé selon l'une quelconque des revendications précédentes, selon lequel le terminal (TT) du premier utilisateur (CT) transmet en outre au serveur (SMI) un identifiant dudit deuxième utilisateur (C1, C2, C3) auquel le premier utilisateur (CT) souhaite transférer le fichier, et le serveur (SMI) prépare un message instantané proposant le transfert dudit fichier pour ledit deuxième utilisateur (C1, C2, C3) ainsi identifié.

5. Serveur (SMI) apte à être utilisé dans un système de messagerie instantanée (10) comprenant en outre des terminaux utilisateurs (T1, T2, T3, TT), ledit serveur (SMI) comprenant :
- des moyens pour associer à un utilisateur (C1, C2, C3, CT) et actualiser un état courant de disponibilité pour dialoguer ;
- des moyens de mémorisation (BF, BO, BL) stockant au moins une liste (BL1, BL2, BL3, BLT) associée audit utilisateur (C1, C2, C3, CT) du système (10) et indiquant d'autres utilisateurs désignés préalablement par ledit utilisateur (C1, C2, C3, CT) comme ses contacts,
- des moyens (M_FTM) adaptés pour recevoir un fichier provenant d'un premier terminal utilisateur (TT), pour déterminer un identifiant dudit fichier et pour stocker le fichier reçu dans les moyens de mémorisation (BF) ;
- des moyens pour, suite à la réception d'un message instantané provenant d'au moins un deuxième terminal utilisateur (T1, T2, T3) d'au moins un deuxième utilisateur (C1, C2, C3) acceptant le transfert dudit fichier stocké, transférer ledit fichier audit deuxième terminal utilisateur (T1, T2, T3).

6. Terminal utilisateur (TT) apte à être utilisé dans un système de messagerie instantanée (10) comportant en outre un serveur (SMI) comprenant des moyens pour associer à un utilisateur (C1, C2, C3, CT), et actualiser, un état courant de disponibilité pour dialoguer, des moyens pour dialoguer, des moyens de mémorisation (BF, BO, BL) stockant au moins une liste (BL1, BL2. BL3, BLT) associée audit utilisateur (C1, C2, C3, CT) du système (10) et indiquant d'autres utilisateurs désignés préalablement par ledit utilisateur (C1, C2, C3, CT) comme ses contacts,
ledit terminal utilisateur (TT) comprenant des moyens pour, lorsqu'un premier utilisateur (CT) dudit terminal utilisateur (TT) procède au transfert d'un fichier, transférer ledit fichier depuis le terminal utilisateur (TT) à destination du serveur (SMI) pour le stockage dudit fichier reçu dans les moyens de mémorisation (BF) du serveur (SMI) et la détermination par le serveur (SMI) d'un identifiant dudit fichier ;
et des moyens pour la préparation d'un message instantané destiné à au moins un deuxième utilisateur (C1, C2, C3) indiqué dans la liste (BLT) associée audit premier utilisateur (CT), ledit message instantané comprenant l'identifiant du fichier déterminé par le serveur (SMI) et l'identifiant dudit premier utilisateur (CT) souhaitant transférer le fichier et proposant le transfert dudit fichier.

7. Terminal selon la revendication 6, comprenant :
- des moyens pour recevoir du serveur (SMI) un message instantané comprenant l'identifiant du fichier ;
- des moyens pour préparer le message instantané destiné audit deuxième utilisateur (C1, C2, C3) et proposant le transfert du fichier ; et,
- des moyens pour envoyer ledit message instantané préparé au deuxième terminal utilisateur (T1, T2, T3) du deuxième utilisateur (C1, C2, C3).

8. Dispositif de gestion de fichiers provenant d'un terminal utilisateur, comprenant au moins:
- des moyens de détermination d'un identifiant d'un fichier stocké ;
- des moyens de stockage dudit identifiant en association avec ledit fichier stocké;
**caractérisé en ce qu'**il comprend ;
- des moyens de traitement antivirus dudit fichier stocké ;
- des moyens de versionnage dudit fichier stocké.

9. Procédé de transfert de fichiers dans un système de messagerie instantanée (10), ledit système comprenant un premier terminal (TT), au moins un deuxième terminal (T1, T2, T3) et un serveur (SMI)
ledit procédé comprenant:
- un étape de transfert (1) d'un fichier depuis le premier terminal (TT) vers le serveur (SMI),
- un étape de préparation d'un message instantané, ledit message instantané comprenant un identifiant dudit fichier et un identifiant d'un premier utilisateur (CT), ledit message instantané proposant un transfert dudit fichier,
procédé **caractérisé en ce qu'**il comprend en outre
- un étape d'envoi (4a) dudit message instantané depuis ledit serveur (SMI) vers ledit deuxième terminal (T1, T2, T3) en fonction d'un état de disponibilité d'au moins un deuxième utilisateur (C1, C2, C3) dudit deuxième terminal (T1, T2, T3).

10. Programme d'ordinateur comprenant des instructions pour mettre en oeuvre les étapes d'un procédé selon l'une quelconque des revendications 1 à 4 et 9 lorsque ledit programme est exécuté par un ordinateur.
